(19) Europäisches Patentamt
European Patent Office
Office européen des brevets

(11) **EP 4 760 607 A2**

(12) **EUROPEAN PATENT APPLICATION**

(43) Date of publication:
**17.06.2026 Bulletin 2026/25**

(21) Application number: **26173031.1**

(22) Date of filing: **11.10.2023**

(51) International Patent Classification (IPC):
*G06N 10/60* (2022.01)

(52) Cooperative Patent Classification (CPC):
**G06N 10/40; G06N 3/0475; G06N 3/094;
G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.10.2022 GB 202215101
17.08.2023 US 202318451255**

(62) Document number(s) of the earlier application(s) in
accordance with Art. 76 EPC:
**23794092.9 / 4 587 967**

(71) Applicant: **ORCA COMPUTING LIMITED
London, W2 6LA (GB)**

(72) Inventors:
• **Wallner, Hugo**
  **London, w2 6LA (GB)**
• **Clements, William**
  **London, w2 6la (GB)**

(74) Representative: **Tatham, Richard Charles
Orca Computing Limited
30 Eastbourne Terrace
London W2 6LA (GB)**

Remarks:
This application was filed on 17-04-2026 as a
divisional application to the application mentioned
under INID code 62.

(54) **BOSON SAMPLER AND NEURAL NETWORK FOR DATA GENERATION**

(57)     Methods are provided for generating a dataset (e.g., an image). According to an example, the method comprises controlling a boson sampler to produce one or more integer sequences, each of the one or more integer sequences representative of a measurement outcome of one or more photodetectors of the boson sampler; determining, from the one or more integer sequences, one or more latent vectors; and using the determined set of latent vectors, training an artificial neural network (ANN) to convert one or more latent vectors to a generated dataset. Methods for using the trained ANN are also provided. Systems and computer-readable storage media are also described.

FIG. 5

EP 4 760 607 A2

## Description

## Technical Field

The present disclosure relates to methods and systems for generating datasets. More particularly, the present disclosure relates to methods and systems for generating datasets using artificial neural networks coupled to boson samplers.

## Background

Computer-aided data generation (e.g., image generation) is of increasing interest to the world and, with the advent of artificial neural networks, many different data generation systems have been created. However, such data generation systems often suffer setbacks such as being unable to identify correlated features in the datasets on which they are trained. For example, an artificial neural network trained on a dataset of pictures of human faces to generate images will still often produce inconsistencies in the images it generates, such as the two ears on a generated face being very different to one another.

Summary

According to an aspect of the present disclosure, a system is provided. The system comprises a boson sampler and a set of one or more processors. The set of one or more processors is configured to control the boson sampler to produce one or more integer sequences, each of the one or more integer sequences representative of a measurement outcome of one or more photodetectors of the boson sampler. The set of one or more processors is further configured to determine, from the one or more integer sequences, one or more latent vectors. The set of one or more processors is further configured to provide the determined one or more latent vectors to a trained artificial neural network (ANN) configured to convert one or more latent vectors to a generated dataset (e.g. an image). The set of one or more processors is further configured to output the generated dataset. Advantageously, the system utilises quantum-correlated data to generate datasets.

The boson sampler may comprise a single-photon boson sampler. In other words, the boson sampler may generate a photonic state comprising $N$ single photons distributed across $M$ modes of electromagnetic radiation (with $N$ less than or equal to $M$), may provide that photonic state to an interferometer / optical network, and may measure the quantum superposition state output from the interferometer.

The boson sampler may comprise a Gaussian boson sampler. In other words, the boson sampler may generate a photonic state comprising $M$ Gaussian modes, for example squeezed coherent states, may provide that photonic state to an interferometer, and may measure the quantum superposition state output from the interferometer.

The boson sampler may comprise a spatial mode boson sampler. In other words, the boson sampler may generate a multimodal photonic state by producing photons/Gaussian states in each of a plurality of spatial modes, may provide the photonic state to multiple input ports of an interferometer and a measure the output from a plurality of output ports of the interferometer using a plurality of photodetectors.

The boson sampler may comprise a temporal mode boson sampler. In other words, the boson sampler may generate a multimodal photonic state by producing photons/Gaussian states in each of a plurality of temporal modes, may interfere those temporal modes, and may measure the output quantum superposition state using a single photodetector.

In some examples, the boson sampler may be a configurable boson sampler. In other words, the interferometer of the boson sampler may be adjustable/tuneable. The one or more processors may be configured to configure tuneable elements of the interferometer of the boson sampler in accordance with a plurality of selected parameter values.

The one or more photodetectors of the boson sampler may comprise photon number resolving detectors. Each integer of an integer sequence may accordingly be representative of a number of photons measured by a photodetector of the boson sampler. Photon number resolving detectors are capable of capturing correlations between the numbers of photons in different output modes.

The one or more photodetectors of the boson sampler may comprise threshold detectors configured to indicate the presence of absence of photons in each output mode. Each integer of an integer sequence may accordingly have a binary value. Each binary integer may be representative of the presence or absence of photons in the corresponding measured output mode. Threshold detectors are often capable of operating at room temperature without special cooling apparatus and accordingly the system footprint can be smaller. Furthermore, correlated binary latent spaces may be optimal for some image datasets.

The system may also be suitable for training the ANN to generate datasets (e.g. images). For example, the set of one or more processors may be further configured to control the boson sampler to produce a set of integer sequences, each integer sequence representative of a measurement outcome of one or more photodetectors of the boson sampler.

The set of one or more processors may be further configured to determine, from the set of integer sequences, a set of latent vectors. The set of one or more processors may be further configured to, using the determined latent vectors, train the artificial neural network (ANN) to convert one or more latent vectors to a generated dataset (e.g. an image).

The set of one or more processors may comprise a heterogeneous selection of processors. For example, the set of one or more processors may comprise a field-programmable gate array (FPGA) configured to control the boson sampler or application specific integrated circuit (ASIC) for controlling the boson sampler. The set of one or more processors may further comprise one or more processors for training/using the artificial neural network, for example a graphics processing unit (GPU).

According to an aspect of the present disclosure, a method is provided for generating a dataset (e.g. an image). The method comprises controlling a boson sampler to produce one or more integer sequences, each of the one or more integer sequences representative of a measurement outcome of one or more photodetectors of the boson sampler. The method further comprises determining, from the one or more integer sequences, one or more latent vectors. The method further comprises providing the determined one or more latent vectors to a trained artificial neural network (ANN) configured to convert one or more latent vectors to a generated dataset. The method further comprises outputting the generated dataset.

According to an aspect of the present disclosure, a method is provided. The method comprises controlling a boson sampler to produce a set of integer sequences, each integer sequence representative of a measurement outcome of one or more photodetectors of the boson sampler. The method further comprises determining, from the set of integer sequences, a set of latent vectors (e.g. a "first" set of latent vectors). The method further comprises, using the determined latent vectors, training an artificial neural network (ANN) to convert one or more latent vectors (e.g. a "second" set of one or more latent vectors) to a generated dataset (e.g. an image). Advantageously, the use of the boson sampler generates correlations (more particularly, quantum entanglement between numbers of photons in output modes of the photonic state output from the boson sampler's interferometer). Accordingly, the latent space from which the latent vectors are sampled is rich in correlations, which in turn improves the ability of the ANN to learn correlations in the dataset on which it is trained.

The ANN may be trained in a number of different ways. According to some examples, training the ANN to convert one or more latent vectors (e.g. the "second" set of one or more latent vectors) to a generated dataset may comprise training a generative adversarial network (GAN). The GAN comprises the ANN and a second ANN known as a discriminator or critic. Training the GAN may comprise training the ANN, using the determined latent vectors and feedback from the second ANN, to generate an artificial dataset; and training the second ANN, using a plurality of artificial datasets generated by the ANN and a plurality of genuine datasets, to classify received datasets as artificial datasets or genuine datasets, and to provide feedback to the ANN; and outputting the trained ANN configured to convert one or more latent vectors to a generated dataset.

Using the determined latent vectors to train the ANN to convert one or more latent vectors to a generated image may include providing different latent vectors to different layers of the neural network.

The ANN comprises a convolutional neural network.

The method for training the ANN or the method for generating a dataset may further comprise selecting a plurality of parameter values to configure an interferometer of the boson sampler. Controlling the boson sampler may accordingly comprise controlling the configured boson sampler.

The set of integer sequences may comprise a set of binary strings. For example, the boson sampler may comprise one or more threshold detectors that detect the presence or absence of photons as opposed to the number of photons in each output mode, and encode this information in a binary sequence.

Determining, from the one or more integer sequences, one or more latent vectors may comprise post-processing of the integer sequences, for example truncating the integer sequences.

According to an aspect of the present disclosure a non-transitory computer-readable medium is provided. The computer-readable medium has instructions stored thereon that, when executed by one or more processors in communication with a boson sampler, cause a method for training an artificial neural network as described herein to be executed. For example, the instructions when executed may cause the one or more processors to: control the boson sampler to produce one or more integer sequences, each of the one or more integer sequences representative of one or more photodetectors of the boson sampler; determine, from the one or more integer sequences, a set of latent vectors (e.g. a first set); and using the set of latent vectors, train an artificial neural network (ANN) to convert a set (e.g. a second set) of one or more latent vectors to a generated dataset.

According to an aspect of the present disclosure a computer-readable medium is provided. The computer-readable medium has instructions stored thereon that, when executed by one or more processors in communication with a boson sampler, causes a method of generating a dataset (e.g. an image) as described herein to be executed. For example, the instructions when executed may cause the one or more processors to: control the boson sampler to produce one or more integer sequences, each of the one or more integer sequences representative of a measurement outcome of one or more photodetectors of the boson sampler; determine, from the one or more integer sequences, one or more latent vectors; provide the determined one or more latent vectors to a trained artificial neural network (ANN) configured to convert the one or more latent vectors to a generated dataset (e.g. an image); and output the generated dataset.

Advantageously the methods and systems described herein enable the generation of datasets using latent vectors taken from a highly correlated quantum latent space. This can advantageously improve the quality of datasets generated.

A computer program and/or the code/instructions for performing such methods as described herein may be provided to an apparatus, such as a computer, on a computer-readable medium or computer program product. The computer-readable medium may comprise a non-transitory computer-readable medium. The computer-readable medium could be, for example, an electronic, magnetic, optical, infrared, electromagnetic, or semiconductor system, or a propagation medium for data transmission, for example for downloading the code over the Internet. Alternatively, the computer-readable medium could take the form of a physical computer-readable medium such as a semiconductor or solid-state memory, magnetic tape, a removable computer diskette, a random access memory (RAM) a read-only memory (ROM), a rigid magnetic disc, and an optical disk, such as a CD-ROM, CD-RW or DVD.

Many modifications and other embodiments of the disclosure set out herein will come to mind to a person skilled in the art. Therefore, it will be understood that the disclosure herein is not to be limited to the specific embodiments disclosed herein. Moreover, although the description provided herein provides example embodiments in the context of certain combinations of elements, steps and/or functions may be provided by alternative embodiments without departing from the scope of the disclosure.

**Brief Description of the Figures**

Illustrative embodiments of the present disclosure will now be described by way of example only, with reference to the accompanying figures.

**Fig. 1** shows an illustration of a trained artificial neural network according to an example.

**Fig. 2** shows a block diagram of a system according to an example.

**Fig. 3** shows an illustration of a boson sampler according to an example.

**Fig. 4** shows an illustration of a boson sampler according to an example.

**Fig. 5** shows a flowchart of a method suitable for performance by the system of **Fig. 2** according to an example.

**Fig. 6** shows an illustration of a generative adversarial network framework that may be utilised by the system of **Fig. 2** in training an artificial neural network according to an example.

**Fig. 7** shows a flowchart of a method for generating an image according to an example.

**Fig. 8** shows an illustration of a trained artificial neural network according to an example.

**Fig. 9** shows a graph depicting results of an experiment performed by the inventors.

**Fig. 10** shows a graph depicting results of an experiment performed by the inventors.

**Fig. 11** shows a table.

**Fig. 12** shows images generated by differently trained artificial neural networks in an experiment performed by the inventors.

**Fig. 13** shows a table.

Throughout the description and the drawings, like reference numerals refer to like parts.

**Detailed Description**

Embodiments of the disclosure are described with reference to the accompanying drawings. However, it should be appreciated that the disclosure is not limited to the embodiments, and all changes and/or equivalents or replacements thereto also belong to the scope of the disclosure. The same or similar reference denotations may be used to refer to the same or similar elements throughout the specification and the drawings.

As used herein, the terms "have", "may have", "include", or "may include" a feature (e.g. a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B", "at least one of A and/or B", or "one or more of A and/or B" may include all possible combinations of A and B. For example, "A or B", "at least one of A or B", "at least one of A and B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order of importance of the components.

It will be understood that when an element (e.g. a first element) is referred to as being (physically, operatively or communicatively) "coupled with/to", or "connected with/to" another element (e.g. a second element), it can be coupled "with/to" the other element directly or via a third element. In contrast, it will be understood that when an element (e.g. a first element) is referred to as being "directly coupled with/to" or "directly connected with/to" another element (e.g. a second element), no element (e.g. a third element) intervenes between the element and the other element.

The terms as used herein are provided merely to describe some embodiments thereof, but not to limit the scope of other embodiments of the disclosure. It is to be understood that the singular forms "a", "an", and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealised or overly formal sense unless expressly so defined herein.

As previously indicated, the present disclosure relates to methods and systems for generating output datasets using artificial neural networks coupled to boson samplers. For ease of explanation, the following descriptions refer to the specific example of generating images. However, this is merely for convenience. The descriptions herein are also applicable to generating other types of datasets, such as synthetic images, synthetic videos, synthetic 3D shapes, synthetic text, synthetic molecule geometries or formulae, and synthetic time series. Examples of synthetic time series include sound, financial time series, weather-related time series such as wind, clouds, or temperature, time series of energy production in a grid, or time series of sensor data (such as speed or acceleration in a vehicle). Other output datasets may comprise synthetic graphs such as social networks or transportation networks. An output dataset may also comprise conditional data, for example images conditioned on a text input, or images conditioned on other images. An example of an image conditioned on another image is a high-resolution image conditioned on a low-resolution image. An output dataset may also comprise any combination of the above, such as joint images and text caption. The words "synthetic" and "artificial" are used interchangeably herein to indicate the generated output of the network.

Generally speaking, an artificial neural network (ANN) is a method of function approximation loosely modelled on an animal brain, and comprising a plurality of nodes known as neurons, a plurality of connections between the nodes, and a plurality of weights and biases associated with the neurons and neuron-to-neuron connections therebetween. Each neuron is configured to receive one or more inputs and to provide those one or more inputs as weighted argument(s) to a non-linear transfer function that provides the neuron's output. The transfer function is sometimes known as an activation function. The weightings of the inputs of the activation function are defined by the weights and biases associated with that neuron and its connections. The activation function may be, for example, the sigmoid activation function, the tanh activation function, or the rectified linear (ReLu) activation function.

The neurons are typically arranged in layers, such as visible layers including input and output layers, and hidden layers. The outputs of neurons in the input layer and each hidden layer are provided as inputs to a subsequent layer or layers, and the output layer produces the output of the network. Accordingly, the ANN receives a plurality of input values and converts them to a plurality of output values/results.

Some ANNs can be used to generate synthetic data (sometimes referred to as artificial data), and may be referred to in this document as generator networks. The input values received by the generator network may comprise values selected at random from some probability distribution, and the generator network may produce synthetic data as output values that mimic the dataset on which the ANN is trained. In the terminology of generator networks, an instance of input values may be referred to as a latent vector, and the probability distribution from which a latent vector is selected may be referred to as a latent space.

A neural network needs to be trained in order to perform a task correctly, and may be trained in many different ways. During a training process an ANN learns (or is "trained") by processing data of a collection of representative examples according to a prescribed training routine, forming a probability-weighted distribution between the input values and output values of the ANN. For example, when training a generator network, synthetic data generated by the network may be compared in some way with representative examples from the training data, typically by use of a cost function, and the weights and biases of the generator network may be iteratively updated according to a learning rule. Successive adjustments will cause the artificial neural network to produce synthetic data that is increasingly similar to the target output data. After a sufficient number of these adjustments the training can be terminated based upon certain criteria. Once trained, the trained model (for example, the trained weights and biases of the neural network) can be stored for future use.

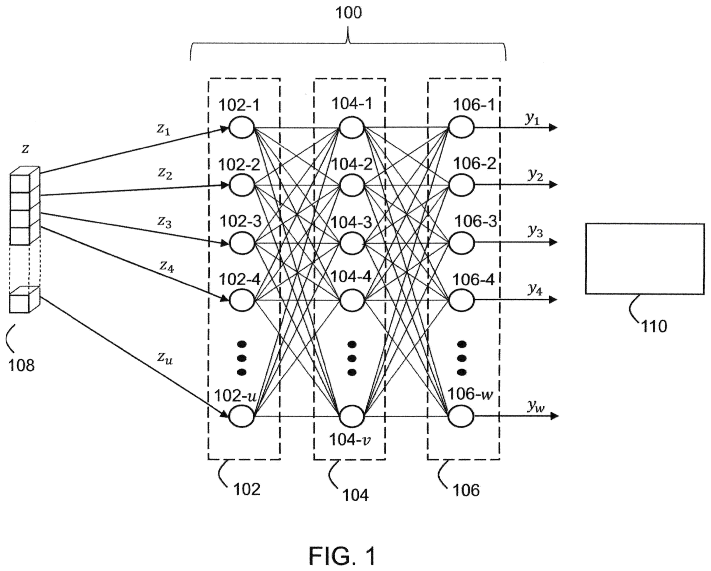

An illustration of a trained ANN 100 for generating an image according to an example is shown in **Fig. 1.** The trained generator network 100 comprises an input layer 102, a hidden layer 104, and an output layer 106. The input layer 102 comprises a first plurality of neurons 102-1 to 102-$u$, the hidden layer 104 comprises a second plurality of neurons 104-1 to 104-$v$, and the output layer 106 comprises a third plurality of neurons 106-1 to 106-$w$. While only a single hidden layer is shown in **Fig. 1,** the skilled person would appreciate that an ANN may have several hidden layers between the input layer 102 and output layer 106. The number of neurons in each layer may be the same or different. Furthermore, while every neuron in a layer is connected to every neuron in the next layer in the ANN 100, the skilled person will appreciate that each neuron may be connected to fewer neurons of the next layer, or may be connected to a neuron in the same layer or a preceding layer. The activation function implemented by each neuron may be, for example, the sigmoid activation function, the tanh activation function, or the rectified linear (ReLu) activation function.

The trained generator network 100 is configured to receive as input a latent vector 108, denoted z in the figure. The latent vector $z$ 108 is from a latent space derived from a boson sampler. The neurons 102-1 to 102-$u$ of the input layer 102 are each configured to take the magnitude of a component ($z_1$ to $z_u$) of the latent vector $z$ 108 as input, to provide that magnitude as an argument to the neuron's activation function, and to output the result to neurons of the hidden layer 104. The neurons 104-1 to 104-$v$ of the hidden layer 104 are each configured to receive inputs from the preceding layer (in this example the input layer 102), to provide those inputs as weighted arguments to the neuron's activation function, and to output the result to neurons of the output layer 106. The neurons 106-1 to 106-$w$ of the output layer are each configured to receive inputs from the preceding layer (in this example the hidden layer 104), to provide those inputs as weighted arguments to the neuron's activation function, and to output the result. The output values $y_1$ to $y_w$ of the neurons of the output layer 108 are collectively interpretable as an image 110. For example, the output values $y_1$ to $y_w$ of the neurons of the output layer may comprise pixel values. In some examples, the image 110 may be a grayscale image and each output value $y_j$ of the output layer 106 may correspond to a respective pixel of the image 110. In some examples, the image 110 may be a colour image and, for example, each pixel of the image 110 may be represented by three output values of the neural network 100, one for each of the red, green, and blue channels of the pixel. Accordingly, the ANN 100 is configured to receive as input a latent vector $z$ (108) and to generate an artificial/synthetic image (110).

The skilled person will appreciate that the neural network architecture of an ANN compatible with the disclosures herein may be different to that shown in **Fig. 1.** For example the ANN may comprise one or more convolution layers, one or more max-pool layers, and/or a soft-max layer, and may include skip connections.

The ANN 100 may have been trained by attempting to optimise a cost function indicative of the error between synthetic images (which are examples of synthetic datasets) generated by the ANN to a training set of genuine images (which are examples of genuine datasets). For example, training may comprise minimising a cost function such as a quadratic cost function, a cross-entropy cross function, a log-likelihood cost function. The minimisation may be performed for example by gradient descent, stochastic gradient descent or variations thereof, using backpropagation to adjust weights and biases within the neural network accordingly. Training may involve the use of further techniques known to the skilled person, such as regularization. Mini-batch sizes, learning rates, numbers of epochs and other hyperparameters may be selected and fine-tuned during training. The ANN 100 may be trained as part of a generative adversarial network for example.

As illustrated above, a generator network learns to transform a sample from a latent space to a synthetic dataset that, in the above example represents an image. A latent space is a hypothetical space that contains points (defined by corresponding latent vectors z) that may represent images or other types of datasets. A trained generator network is an ANN that has been trained to convert a point from the latent space (that is, a latent vector) to a dataset (e.g., an image), preferably similar to the dataset on which that ANN was trained.

Traditionally, each input value to a generator network is independently selected from a probability distribution such as a normalised Gaussian distribution (often denoted $\aleph\,(0, I)$) or a uniform distribution. However, such independent latent spaces are often suboptimal when generating realistic synthetic datasets (e.g., images). The inventors have recognised the importance of structure in a latent space to improve the performance of a generative model, to identify factors of variation in the data, and to enable better manipulation of the generated data. Furthermore, the inventors have recognised that uncorrelated latent spaces may complicate the task of capturing correlated features in complex data, and that a richer and more structured latent space can help to better generate some types of target data. In particular, the inventors have recognised that a non-universal quantum processor known as a boson sampler can help with generating latent vectors from a structured latent space.

A boson sampler is a non-universal quantum computer that relies on the interference of identical photons to generate its output. More particularly, a boson sampler comprises a network of optical components or elements (an interferometer) in which identical photons interfere with one another. As photons are quantum objects, the output of this network is described by a large quantum superposition of all the possible outcomes. When a measurement is performed at the output of this network using one or more photodetectors, a single measurement outcome is realised from this superposition. If photon number resolving (PNR) detectors are used, then each measurement outcome may be described by an array/string/sequence of integers indicating how many photons were found in each output mode of the output state. If threshold detectors are used, then each measurement outcome may be described by an array/string/sequence of integers, for example a binary sequence, indicating whether photons were present or absent in each output mode of the output state.

The photonic superposition states output from an interferometer of a boson sampler can be used to generate highly correlated probability distributions. This is starkly exemplified by the famous Hong-Ou-Mandel effect: if two identical single photons are incident on a 50/50 beam splitter at the same time, one in each of two input modes (input paths) of the beam splitter, then due to interference the output modes (output paths) taken by the photons become entangled. The output state can be expressed as a superposition of two configurations - one in which both photons are deflected to a first output mode and one in which both photons are deflected to the second output mode. Due to interference, other conceivable possibilities such as each output path carrying a single photon are cancelled out. The probability of the two photons being found in a particular one of the output modes is 50%. Accordingly, due to the quantum entanglement of the output modes, the measurement results are highly correlated.

The underlying probability distributions generated by a boson sampler accordingly have a complex structure and simulating this sampling task is understood to be intractable classically. Modern supercomputers fail to simulate boson sampler distributions generated from more than a few tens of modes.

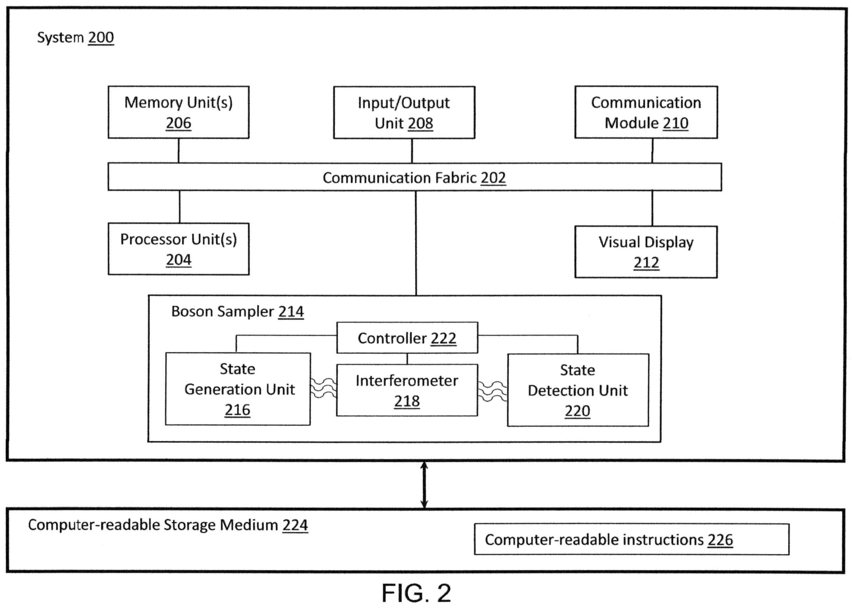

**Fig. 2** depicts a block diagram of a heterogeneous image generation system 200 in which illustrative embodiments may be implemented. The heterogeneous system 200 comprises both classical processing apparatus and quantum processing apparatus. Other architectures to that shown in **Fig. 2** may be used as will be appreciated by the skilled person. For example, system 200 may be distributed across multiple interconnected devices.

System 200 is an example of a specialised computing apparatus, in which computer usable program code or instructions implementing the processes may be located. In this example, system 200 includes communications fabric 202, which provides communications between processor unit(s) 204, memory unit(s) 206, input/output unit 208, communications module 210, display 212, and boson sampler 214.

The one or more processing units / processors 204 are configured to, individually or collectively, execute instructions for software that may be loaded into the memory 206. Processor unit(s) 204 may be a set of one or more processors or may be a multi-processor core, depending on the particular implementation. Furthermore, processor unit(s) 204 may be implemented using one or more heterogeneous processor systems in which a main processor is present with secondary processors on a single chip. The one or more processing unit(s) 204 may comprise one or more central processing units (CPUs), one or more graphics processing units (GPUs) or any combination thereof. If the processor unit(s) comprises multiple processors, the multiple processors may operate individually or collectively.

The one or more memory unit(s) 206 may comprise any piece of hardware that is capable of storing information, such as, for example, data, program code in functional form, and/or other suitable information on a temporary basis and/or a permanent basis. The one or more memory units 206 may include, for example, a random access memory or any other suitable volatile or non-volatile storage device. The one or more memory units 206 may include a form of persistent storage, for example a hard drive, a flash memory, a rewritable optical disk, a rewritable magnetic tape, or some combination thereof. The media used for persistent storage may also be removable. For example, the one or more memory units 206 may include a removable hard drive.

Input/Output unit 208 enables the input and output of data with other devices that may be in communication with the system 200. For example, input/output unit 208 may provide a connection for user input through a keyboard, a mouse, and/or other suitable devices. The input/output unit 208 may provide outputs to, for example, a printer.

Communications module 210 enables communications with other data processing systems or devices. The communications module 210 may provide communications through the use of either or both physical and wireless communications links. For example, the communications module 210 may be configured to communicate with other data processing systems or devices via a wired local area network connection, via WiFi or over a wide area network such as the internet.

Instructions for the applications and/or programs may be located in the one or more memory units 206, which are in communication with the one or more processor units 204 through communications fabric 202. Computer-implementable instructions may be in a functional form on persistent storage in the memory unit(s) 206, and may be performed by processor unit 204.

These instructions may sometimes be referred to as program code, computer usable program code, or computer-readable program code that may be read and executed by a processor in processor unit 204. The program code in the different embodiments may be embodied on different physical or tangible computer-readable media.

The memory unit(s) 206 may further store data files for use by the one or more processor unit(s) such as trained weights and biases for an artificial neural network (such as ANN 100), and information concerning the configuration of the ANN.

The boson sampler 214 comprises a state generation unit 216, a linear interferometer 218, a state detection unit 220 and a dedicated (classical) control unit 222.

The state generation unit 216 is configured to generate an input multimodal photonic state $|\Psi_{IN}\rangle$ comprising a plurality of input modes. The input multimodal photonic state is a product state (in other words, there is no quantum entanglement between input modes) comprising a plurality of $N$ non-vacuum optical inputs distributed across a plurality of $M$ input modes.

In some examples, the state generation unit 216 may be configured to generate an input multimodal photonic state $|\Psi_{IN}\rangle$ comprising $N$ photons distributed across the plurality of $M$ modes. When the number of photons $N$ is less than or equal to the number of input modes $M$, and one photon is provided in each of the populated input modes (in which case the boson sampler may be referred to as a single-photon boson sampler), the input state can without loss of generality be expressed as

$$|\Psi_{IN}\rangle = |1_1, 1_2, \cdots, 1_N, 0_{N+1}, \cdots, 0_M\rangle = \hat{a}_1^\dagger \cdots \hat{a}_N^\dagger |0_1, \cdots, 0_M\rangle$$

where $\hat{a}_k^\dagger$ is the bosonic creation operator in the $k^{th}$ mode. The skilled person will appreciate that the methods and systems described herein are also applicable when one or more input modes comprise more than one photon.

In other examples, the state generation unit 216 may be configured to generate an input multimodal photonic state $|\Psi_{IN}\rangle$ comprising a Gaussian photonic input in each of the $N$ input modes (in which case the boson sampler may be referred to as a Gaussian boson sampler). For example, a single mode squeezed state (SMSS), also referred to as a squeezed coherent state, may be input into each input mode. The amount of squeezing in each input mode may be configured to meet certain criteria, for example to achieve a predefined average photon number. In some examples, training an ANN may include training of the squeezing of each input state.

In some examples, the state generation unit may be configured to generate an input multimodal photonic state $|\Psi_{IN}\rangle$ that comprises single photons in some modes and squeezed coherent states in other modes.

The state generation module 216 may comprise one or more light sources. For example, in a single-photon boson sampler, the state generation module 216 may comprise a non-linear photonic material (such as periodically-poled lithium niobate (PPLN) or potassium titanyl phosphate (KTP)) configured to receive a pump beam from a pump laser and to probabilistically generate pairs of entangled photons, and may further comprise a photodetector configured to detect a photon of the entangled pair, thereby heralding the presence of the other photon of the pair. For example, in a Gaussian boson sampler, the state generation module 216 may comprise PPLN waveguides configured to generate two entangled modes of light, and a 50:50 beamsplitter for interfering the two modes of light, thereby generating two independent single mode squeezed Gaussian states.

The interferometer 218 comprises a plurality of optical elements arranged to interfere the modes of the input multimodal photonic state, thereby transforming the input multimodal photonic state to produce an output multimodal photonic state. The interferometer 218 is configured to receive the input multimodal photonic state, to transform the input multimodal photonic state to an output multimodal state, and to output the output multimodal photonic state to the state detection unit 220. The transformation is dependent on the values $\{\theta\}$ of a set of parameters $\theta$.

The interferometer 218 may be designed and manufactured in any suitable and desired way e.g. depending on the modes of electromagnetic radiation to be transformed by the interferometer 218. Thus, for example, when the electromagnetic radiation has an optical or infrared wavelength (e.g. between 400nm and 700nm or between 700nm and 1600nm), the optical paths through the interferometer 218 may be implemented at least partially using optical fibres. In some examples, the interferometer 218 may be implemented in bulk optics. However, in other examples, the interferometer 218 may comprise a photonic integrated circuit. In the photonic integrated circuit, the optical paths may be implemented with, for example, a plurality of etched waveguides and plurality of coupling locations arranged in the photonic integrated circuit. At each coupling location, tuneable elements may be arranged (e.g. EOM phase shifters) that are configured to control the coupling interaction between the waveguides. The photonic integrated circuit may be implemented in silicon nitride (Si3N4), thin film lithium niobate, or any other suitable material.

A linear interferometer may be modelled as a unitary transformation, although loss and other factors may mean that the transformation is not exactly unitary, for example photons passing through a beam splitter may be lost due to absorption at the beam splitter or scattering due to a mode not measured by the device. A skilled person will appreciate that the methods and systems described herein are still applicable in circumstances where the transformation is not exactly unitary. The unitary transformation acts on the creation operators as

$$\hat{U}(\boldsymbol{\theta})\hat{a}_i^\dagger \hat{U}(\boldsymbol{\theta}) = \sum_{j=1}^{M} U_{i,j}(\boldsymbol{\theta})\hat{a}_j^\dagger$$

where $\hat{U}(\theta)$ is a unitary matrix. The interferometer 218 is defined by a set of parameters $\boldsymbol{\theta}$. One or more of the parameters $\theta$ may characterise a single mode operation. For example, a parameter may characterise the phase shift imparted by a phase shifter of a passive linear interferometer. One or more of the parameters $\theta$ may characterise a multimodal operation. For example, a parameter may characterise a transmission (or equivalently, a reflection) coefficient of a reconfigurable beam splitter in a passive linear interferometer. If the values $\{\theta\}$ of one or more of the parameters $\theta$ may be reconfigured then the boson sampler is said to be a reconfigurable boson sampler.

The unitary mapping transforms the input state into an output state that may be expressed as a superposition of the different possible configurations of the photons in the output modes as

$$|\Psi_{OUT}(\boldsymbol{\theta})\rangle = \sum_{C} \alpha_C \left| n_1^{(C)}, n_2^{(C)}, \cdots, n_M^{(C)} \right\rangle$$

where $C$ is a configuration, $n_j^{(C)}$ is the number of bosons in the $j^{th}$ output mode in configuration $C$, and $\alpha_C$ is the probability amplitude associated with configuration $C$. By tuning the parameter values $\{\theta\}$, the probability amplitudes associated with each configuration may be changed. Accordingly, a measurement using one or more photon number resolving detectors of the number of photons in each output mode can yield a measurement outcome representable as a string of integers corresponding to a configuration $C$. By operating the boson sampler a plurality $N_S$ of times, it is possible to establish an empirical probability distribution of the bosonic configurations of the output state. One can expect that with many samples, the probability $p_C$ of obtaining a measurement outcome corresponding to configuration $C$ is approximately given by $p_C = |\alpha_C|^2$.

The state detection unit 220 comprises one or more photodetectors configured to measure output modes of the output multimodal photonic state to produce a measurement outcome indicating whether or not bosons were present in each measured output mode. In some examples, the photodetectors may comprise photon number resolving (PNR) detectors, capable of determining how many photons are received. For example, the detectors may comprise superconducting nanowire detectors that generate an output signal intensity proportional to the (discrete) number of photons that strike a detector. The PNR detectors may comprise transition edge sensors (TESs). In other examples, the photodetectors may comprise threshold detectors, also known as on/off detectors. Threshold detectors are not capable of determining how many photons are received but are capable of determining the presence/absence of photons in an output mode.

The controller 222 is communicatively coupled to the processor unit(s) 204, the state generation module 216, the interferometer 218 and the state detection unit 220. The controller 222 may be any suitable classical computing resource for controlling the operation of the boson sampler 214. Preferably, the controller 222 is implemented in a dedicated, application-specific processing unit. For example, the controller 222 may comprise an application-specific integrated circuit (ASIC) or an application-specific standard product (ASSP) or another domain-specific architecture (DSA). Alternatively, the controller 222 may be implemented in adaptive computing hardware (in other words, hardware comprising configurable hardware blocks / configurable logic blocks) that has been configured to perform the required functions, for example in a configured field programmable gate array (FPGA).

The controller 220 is configured to receive instructions from the processor unit(s) 204, and to send measurement outcome information back to the processor unit(s) 204. More particularly, the controller is configured to, if so directed by the one or more processor unit(s) 204, configure the interferometer 218 according to a set of parameter values $\{\theta\}$ and thereby control the transformation of the input multimodal photonic state that is implemented by the interferometer 218. For example, the controller 222 may directly send control signals that tune the reflectivity / transmittance of a reconfigurable beam splitter or the phase imparted by a phase shifter. The controller 222 is further configured to, if so directed by the one or more processor unit(s) 204, generate one or more control signals to cause the one or more single photon sources to produce photons such that the state generation unit 216 produces an input multimodal photonic state. The controller 222 may optionally be able to control which input multimodal photonic state is input into the boson sampler, for example by generating one or more control signals to control the number of photons in each input mode. For example, in a photonic boson sampler in which the state generation module comprises a plurality of single photon sources, the controller may be able to generate one or more control signals to cause a selected number of photons to be emitted at a particular time point.

The controller 222 is further configured to receive a response from the state detection unit 220. More particularly, the controller 222 is configured to receive measurement outcomes from the photodetectors of the state detection unit 220. For example, the measurement outcomes may comprise an electrical signal from each photodetector at which a detection event occurs. In examples wherein the photodetectors are PNR detectors, the electrical signals may further be indicative of the number of photons received.

The controller 222 is further configured to communicate the response from the state detection unit 220 to the one or more processor unit(s) 204.

In **Fig. 2,** computer-readable instructions 226 are located in a functional form on a (e.g., non-transitory) computer-readable storage medium 224 that is selectively removable and may be loaded onto or transferred to system 200 for execution by processor unit(s) 204. A computer-readable storage medium may be, for example but not limited to, an electronic, magnetic, optical, electromagnetic, infrared, or semiconductor system, apparatus, device, or any suitable combination thereof. More specific examples of the computer-readable medium include the following: a portable computer diskette, a hard disk, a random access memory (RAM), a read-only memory (ROM), an erasable programmable read-only memory (EPROM or Flash memory), a portable compact disc read-only memory (CDROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Alternatively, computer-readable instructions 226 may be transferred to system 200 from computer-readable storage medium 224 through a communications link to communications module 210 and/or through a connection to input/output unit 208. The communications link and/or the connection may be physical or wireless.

In some illustrative embodiments, computer-implementable instructions 226 may be downloaded over a network to the memory unit(s) 206 from a remote device for use with system 200. For instance, computer-implementable instructions stored in a remote server may be downloaded over a network from the server to the system 200.

The skilled person would appreciate that the architecture described above in relation to **Fig. 2** is not intended to provide limitations on the computing devices with which the methods described herein may be implemented. Instead, the skilled person would appreciate that other architectures may be applicable. For example, the computing device may include more or fewer components.

The system 200 may be implemented in any of a number of ways. For example, the system 200 may be provided as a number of hardware modules suitable for installation in a server/computer rack (for example a conventional 19-inch server rack). For example, the processor unit(s) 204, memory unit(s) 206, input/output unit 208, and communications module 210 may be provided in a first rack-mounted hardware module, the controller 222 may be implemented in a second rack-mounted hardware module and electronically coupled to the first hardware module, the state generation unit 216 may be implemented in a third rack-mounted hardware module electronically coupled to the controller 222, the interferometer 216 may be implemented in a fourth rack-mounted hardware module electronically coupled to the controller 222 and optical fibre-connected to the state generation unit 216, and the photodetectors of the state detection unit 220 may be provided in another hardware module electronically coupled to the controller 222 and optical fibre-connected to the interferometer module. In other examples, the system 200 may be implemented using one or more separate devices communicatively coupled (at least in part) over a network such as the internet.

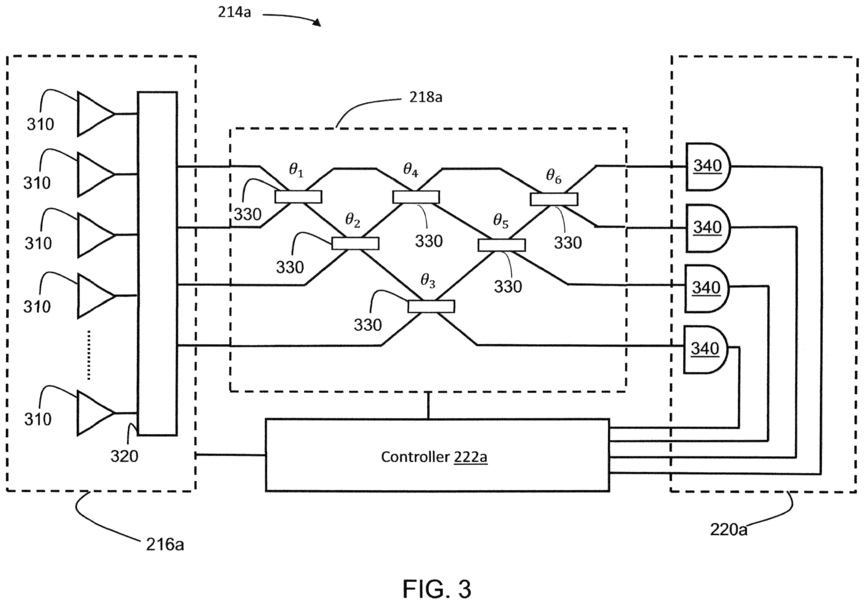

The boson sampler 214 of **Fig. 2** may comprise a spatial mode interferometer, such as the single-photon boson sampler 214a illustrated in **Fig. 3.** In the boson sampler 214a of **Fig. 3,** the modes of the input multimodal photonic state are spatial modes - that is, the state is defined by the number of photons in each of a plurality of spatially distinct paths. The boson sampler 218a may be implemented, at least in part, in a photonic integrated circuit.

The state generation unit 216a of **Fig. 3** comprises a plurality of single-photon sources 310 configured to produce single photons. One suitable photon source technology is spontaneous parametric down-conversion (SPDC). In SPDC, a non-linear crystal is pumped with a laser and, probabilistically, entangled photons are emitted (the "signal" and the "idler"). A photodetector (not shown in **Fig. 3**) is arranged to detect the presence of the idler photon which, due to the entanglement, heralds the presence of a photon in the signal mode. Other photon sources may also be used, for example solid state photon sources and quantum dots.

The number of single photon sources 310 may be greater than the number $M$ of input modes of the input multimodal photonic state $|\Psi_{IN}\rangle$ in order to account for the fact that single photons may be generated only probabilistically. The state generation unit 216a of **Fig. 3** comprises a multiplexer 320 to route successfully generated single photons to $N$ input ports of the $M$ input ports of the interferometer 218a. In the example shown in **Fig. 3,** the number of single photons $N$ is equal to the number of input modes $M$ of the interferometer 218a.

The interferometer 218a comprises $M$ input ports, $M$ output ports, and a plurality of waveguides arranged to pass through the interferometer 218a to connect the $M$ input ports to the $M$ output ports. The plurality of waveguides are arranged to provide a plurality of coupling locations between pairs of the plurality of waveguides. The interferometer 218a may be designed and manufactured in any suitable and desired way e.g. depending on the modes of electromagnetic radiation to be transformed by the interferometer. Thus, for example, when the electromagnetic radiation has an optical or infrared wavelength (e.g. between 400nm and 700nm or between 700nm and 1600nm), the waveguides may comprise optical fibres. In some examples, the interferometer may be implemented in bulk optics. However, in other examples the interferometer comprises a photonic integrated circuit, with the plurality of waveguides and plurality of coupling locations arranged in the photonic integrated circuit. The integrated circuit may be implemented in silicon nitride (Si3N4), thin film lithium niobate or any other suitable material.

A reconfigurable beam splitter 330 is arranged at each of the coupling locations such that at each coupling location the two modes of electromagnetic radiation carried by the two respective waveguides are capable of coupling with each other with a reconfigurable reflection coefficient (transmission coefficient). The reflection (transmission) coefficient of each reconfigurable beam splitter is denoted with a theta in the figure.

A parametrised/reconfigurable beam splitter is understood to mean any tuneable element or device or tuneable collection of elements/devices capable of coupling two modes of electromagnetic radiation with each other with a reconfigurable reflection/transmission coefficient and optionally a reconfigurable phase shift coefficient (not indicated in **Fig. 3**). The parametrised beam splitters may be implemented in any suitable way - for example a parametrised beam splitter may comprise a Mach-Zehnder type interferometer containing a variable phase shifter in one internal path for controlling the effective beam splitter reflection coefficient of the Mach-Zehnder interferometer. The Mach-Zehnder interferometer may further comprise an external phase shifter on one external path of the Mach-Zehnder interferometer to control the relative phases of the two mode acted upon. For example, when the interferometer 218a is implemented in an integrated circuit, a reconfigurable beamsplitter may comprise a first waveguide coupling region for coupling the electromagnetic radiation modes in each waveguide, an electro-optical phase shifting element for adjusting the phase in one of the outgoing waveguides from that coupling region, and a second waveguide coupling region for recoupling the two electromagnetic modes output from the first waveguide coupler. For example, when implemented in bulk optics, a reconfigurable beamsplitter may comprise two 50/50 beamsplitters and a phase shifter element arranged therebetween.

The interferometer 218a may further comprise reflective elements (e.g. mirrors) and other passive photonic elements (not shown). Accordingly, the interferometer 218a couples the single photons received at the $M$ input ports to the plurality of $M$ output ports based on operations defined by a set of parameter values.

The interferometer 218a of **Fig. 3** is suitable for transforming an input multimodal photonic state comprising $M$ input spatial modes to an output multimodal bosonic state comprising $M$ output spatial modes. The skilled person will appreciate that other architectures for the interferometer 218a may be utilised. Of course, while in the illustration the number of input and output modes is $M = 4$, an interferometer 218a may be provided to operate on a greater number of spatial modes. Of course, the interferometer 218a may comprise any number of reconfigurable/parametrised elements and in any configuration that leads to interference between spatial modes.

The state detection unit 220a comprises a plurality of photon number resolving (PNR) photodetectors 340, each arranged to receive any photons output from a corresponding output port of the interferometer 218a. The state detection unit 218a comprises one PNR detector for each of the $M$ output modes and accordingly the measurement outcomes are representative of the number of photons measured in all output modes of the output multimodal photonic state. The PNR detectors may comprise nanowire photodetectors.

The controller 222a is coupled to each of the state detection unit 216a, the interferometer 218a and the state detection unit 220a. The controller 222a is further communicatively coupled to the one or more processor units 204. The controller 222a may receive a set of parameter values from the processor units 204, and may generate control signals to configure the tuneable elements 330 of the interferometer 218a in accordance with those parameter values. For example, each reconfigurable beam splitter 330 may comprise a Mach-Zehnder interferometer comprising two 50/50 beam splitters and a phase shifter located in each of one or both of its internal optical paths. The phase shifter may be implemented using an electro-optical modulator. The control signals may comprise an electric field for controlling the phase shift imparted by the internal phase shifters and therefor the coupling strength of the reconfigurable beam splitter. The controller 222a may further generate a control signal to cause the single photon sources 310 to begin generating single photons, for example the control signal may cause a pump laser to pump light into the non-linear material of the single-photon sources 310. The controller 222a may further receive signals from each of the PNR detectors 340 indicative of the number of photons detected at each of the PNR detectors 340. The controller 222a may then communicate the measurement outcome to the processor unit(s) 204.

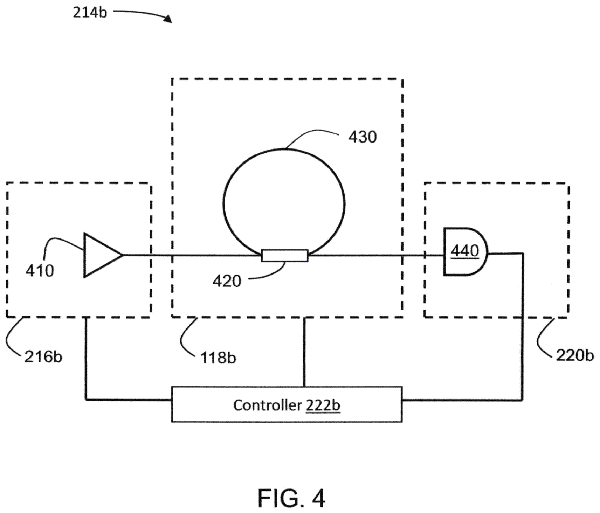

The boson sampler 214 of **Fig. 2** may comprise a temporal mode interferometer, such as the single-photon boson sampler 214b illustrated in **Fig. 4.** In the boson sampler 214b of **Fig. 4,** the modes of the input multimodal photonic state are temporal modes, which means that the state is defined by the number of photons in each of a plurality of temporal modes or time bins.

The state generation unit 216b of **Fig. 4** comprises a single-photon source 410 operable to produce a single photon in each of a plurality of time bins, so that each photon enters the time-bin interferometer 218b separated from the next by a duration $\tau$. As in the boson sampler 214a of **Fig. 3,** the state generation unit 216a may comprise further single photon sources and a multiplexer in order to reliably ensure that a single photon is generated in each time period $\tau$.

The interferometer 216b comprises a temporal mode coupling device. In particular, in **Fig. 4,** a temporal mode coupling device comprises a reconfigurable beam splitter 420 and a delay line 430. The delay line 430 is arranged to connect one input port of the reconfigurable beam splitter 420 with one output port of the reconfigurable beam splitter 420. The delay line may comprise, for example, optical fibre. The delay line 430 has a length $c\tau$ where $c$ is the speed of light in the fibre. In this way, the field of the photon in one temporal mode may be coupled, at least partially, into the delay line 430 so as to interfere with photons in the next temporal mode on the parametrised beam splitter 420. The time-bin interferometer may comprise further optical components including further optical switches.

The controller 222b is configured to tune the parameter value (e.g. transmittance) of the parametrised beam splitter 420 for each time interval. For example, for four input modes, the temporal mode coupling device can be used to implement the equivalent operations of the three beam splitters defined by parameters $\theta 1$, $\theta 2$, and $\theta 3$ shown in **Fig. 3.** For example, the controller 222b may, as a first photon is emitted from the photon source 410, configure the reconfigurable beamsplitter 420 to loop the first photon into the delay line 430. The controller 222b may then, as a second photon is emitted from the photon source 410, configure the reconfigurable beamsplitter 420 using parameter value $\theta 1$ to cause interference between the first temporal mode and second temporal mode (e.g. the first and second photon) of the input state $|\Psi_{IN}\rangle$. The controller 222b may then, as a third photon is emitted from the photon source 410, configure the reconfigurable beamsplitter 420 using parameter value $\theta 2$ to cause interference between the second temporal mode and third temporal mode. The controller 222b may then, as a fourth photon is emitted from the photon source 410, configure the reconfigurable beamsplitter 420 using parameter value $\theta 3$ to cause interference between the third temporal mode and fourth temporal mode.

The state detection unit 220b comprises a photon number resolving (PNR) photodetector 440 configured to detect the number of photons in each temporal mode.

The skilled person would appreciate that the architecture of the temporal mode boson sampler 214b of **Fig. 4** may be varied in several ways. For example, the boson sampler 214b may comprise further reconfigurable beamsplitters 420 and further delay lines 430 in order to generate more complicated interference between temporal modes. The skilled person would further appreciate that delay lines of different lengths may be used to vary which temporal modes are interfered with one another.

The skilled person would appreciate that the spatial mode boson sampler of **Fig 3** and the temporal mode boson sampler of **Fig. 4** may further be operable as Gaussian boson samplers with a suitable substitution of the state generation unit 216a/216b. Furthermore, the PNR detector(s) of the state detection modules 220a/220b may be replaced with threshold detectors, in which case the measurement outcomes output from the state detection unit are indicative of the presence or absence of photons in each output mode but not the number of photons in output modes.

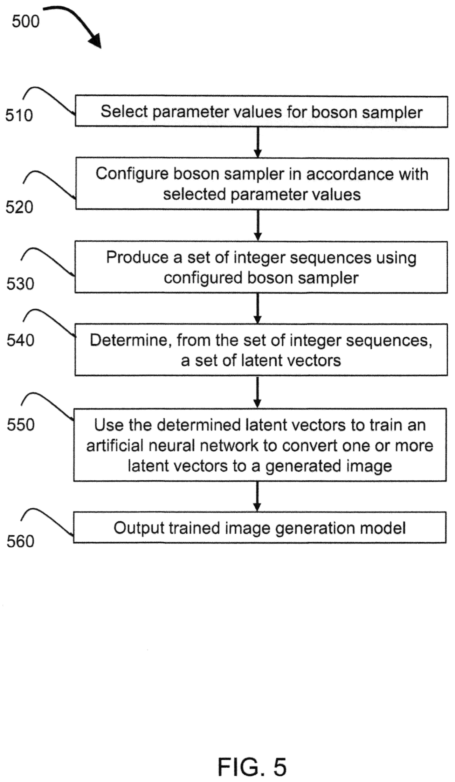

**Fig. 5** shows a flowchart of a method 500 for performance by a system comprising one or more (classical) processor units and a configurable boson sampler, such as system 200 of **Fig. 2.** This method 500 will be discussed with reference to the system 200 of **Fig. 2,** but the skilled person will appreciate that other system architectures may be utilised.

At 510 the method comprises selecting parameter values $\{\theta\}$ of a set of parameters $\theta$ of the boson sampler.

With reference to **Fig. 2,** in some examples, the processor unit(s) 204 may receive an indication of the selected parameter values $\{\theta\}$ from a user input via the input/output unit 208 (for example, via a user directly entering the selected parameter values on a keyboard coupled to the system 200) or the communications module 210 (for example over the internet). In other examples, the processor unit(s) 204 may extract the selected parameter values $\{\theta\}$ from persistent memory of the memory unit 206. The processor(s) may then communicate the selected parameter values to the controller 222 of the boson sampler 214. In some embodiments, parameter values $\{\theta\}$ are selected such that the boson sampler creates an entangled quantum state. Additionally, the parameter values $\{\theta\}$ may be selected such that the statistical properties of the integer sequences from the boson sampler match those of the output data generated by the ANN. Among other advantages, this may lead to improved performance by the ANN. However, this is not required. Improved performance has been observed with a boson sampler with random parameter values $\{\theta\}$, which indicates that the statistics of integer sequences from the boson sampler are generally useful even without taking special care of the parameter values $\{\theta\}$.

At 520, the method comprises configuring the boson sampler according to the selected parameter values $\{\theta\}$. At 530, the method comprises producing a set of integer sequences using the configured boson sampler. The skilled person will appreciate that steps 520 and 530 may occur one after the other or substantially simultaneously, depending on the nature of the boson sampler.

With reference to **Fig. 2,** in some examples the boson sampler 214 may comprise a spatial mode interferometer. Accordingly, the controller 222 may generate control signals to configure parameters of the interferometer 218 in line with the selected parameter values $\{\theta\}$. The controller 222 may subsequently generate one or more control signals to cause the state generation unit 216 to generate an input multimodal photonic state and may subsequently receive an indication of the detection of photons at photodetectors of the state detection unit 220. In other examples, the boson sampler 214 may comprise a temporal mode interferometer. Accordingly, the controller 222 may generate one or more control signals to cause the state generation unit 216 to generate an input multimodal photonic state, and contemporaneously generate one or more control signals to dynamically configure the interferometer 218 while the photonic state passes through. The controller 222 may then receive from a photodetector of the state detection unit 220 a measurement outcome indicating whether photons were measured in each temporal mode of the output multimodal photonic state. The controller 222 may then interpret the number of photons detected in each output mode of the output multimodal photonic state as a sequence $I$

string of integers and provide this integer sequence to the one or more processors 204. For example, each integer of the integer sequence may correspond to a detected number of photons in each mode. By re-running the boson sampler 214 a number of times, the controller 222 may provide a set of integer sequences to the processor unit(s) 204.

In some examples, the state detection unit 220 may comprise one or more threshold detectors that are not capable of photon number resolution. In such circumstances, the generated integer sequences may comprise binary strings, with each element of a binary string indicative of the presence or absence of a detected photon in an output mode of the output multimodal photonic state. For example, an element of a binary sequence may have a value of one if one or more photons are detected in the corresponding output mode, while an element of the binary sequence may have a value of zero if no photons are detected in the corresponding output mode.

At 540, the method comprises determining, from the set of integer sequences, a set of latent vectors. Note that a single integer sequence output from the boson sampler may be used to determine a single latent vector.

With reference to **Fig. 2,** the one or more processor(s) 204 may determine the set of latent vectors from the set of integer sequences by performing one or more post-processing operations on the integer sequences. As an example, the processor unit(s) 204 may truncate the received integer sequences to a size compatible with the design of the ANN to be trained. As an example, the processor unit(s) 204 may add or remove an offset value from each element of an integer sequence, for example to ensure that the sequence has a predefined average value (such as zero) which may be preferable for training some ANNs. As another example, the processor unit(s) 204 may convert the integer sequences to binary sequences, for example by assigning all non-zero elements of the integer sequences the value 1, or for example by assigning all even integers the value 0 and all odd integers the value 1 (or vice versa).

At 550, the method comprises using the determined latent vectors to train an artificial neural network (ANN) to convert one or more latent vectors to a generated image.

With reference to **Fig. 2,** the processor unit(s) 204 may operate according to computer-readable instructions 226 loaded into the memory unit(s) 206 to train an ANN / generator network in any of several suitable ways.

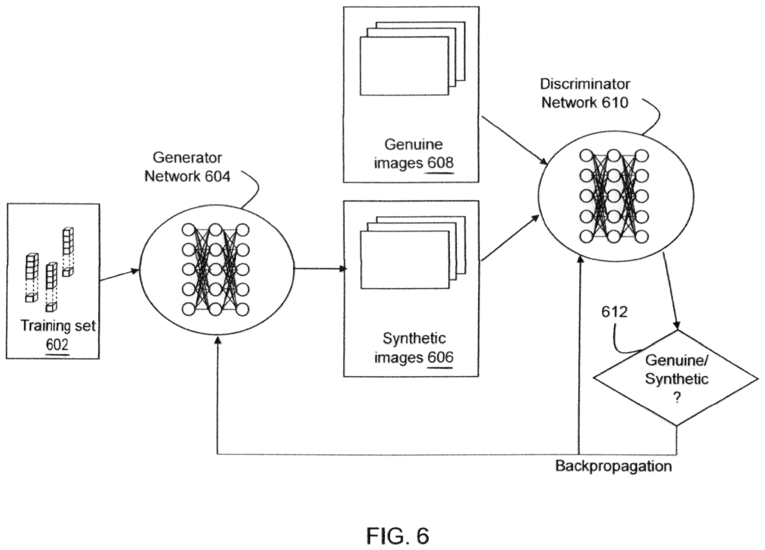

As an example, training the ANN to convert one or more latent vectors to a generated image may comprise training a generative adversarial network (GAN). GANs are an approach to generative modelling using deep learning methods, for example convolutional networks. GANS are a class of deep learning architectures whereby two networks train simultaneously, with a first ANN focused on data generation (the generator) and a second ANN focused on data discrimination (known as the discriminator or critic). With reference to **Fig. 6,** the generator network 604 and the discriminator network 610 'compete' against each other. The generator network 604 is trained on a training set 602 of latent vectors, each latent vector determined from an integer sequence produced by the boson sampler. The generator network 604 converts latent vectors to corresponding artificial/synthetic/generated images 606. The discriminator network 610 receives either a genuine image from a training set 608 of genuine images, or an artificial image from the set 606 generated by the generator 604, and must distinguish between the two (indicated at 612 in the figure). The generator 604 is trained to fool the discriminator 610. Feedback from the discriminator 610 is used to train the discriminator 610 until it achieves acceptable accuracy. Feedback from the discriminator network 610 is also used to train the generator network 604 based on whether it fools the discriminator 610. Formally, the game between the generator 604 and the discriminator 610 may be expressed as one of optimising the minimax objective:

$$\min_{G} \max_{D} \underset{x \in P_r(x)}{E}[\log D(x)] + \underset{z \in P_z(z)}{E}[\log D(G(z))]$$

where $P_r(x)$ is the data distribution of the genuine image set $x$ and $P_z(z)$ is the distribution of the latent vectors z produced using a boson sampler. The functions $G(z)$ and $D(x)$ refer respectively to the output of the generator network 604 and discriminator network 610.

Further GAN-training techniques may be used to improve the quality of the images generated by the output generator network 604. Such techniques may include, for example, feature matching, minibatch discrimination, historical averaging, one-sided label smoothing, and virtual batch normalisation.

As another example, training the ANN to convert one or more latent vectors to a generated image may comprise training a conditional GAN (cGAN). A conditional GAN (cGAN) is an extension to the GAN idea. In a cGAN, the generative model can be trained to generate new examples from the input domain, where the random vector from the latent space is provided with/ conditioned by some additional value, such as a class value, a digit or so on. The discriminator model is also trained by being provided with both an input image that is real or fake and the additional input.

As another example, training the ANN to convert one or more latent vectors to a generated image may comprise training a cycle-Gan. A cycle-GAN is an extension to the GAN idea. A cycle-GAN may comprise two generator networks and two discriminator networks. One generator may take latent vectors (derived from boson sampler outputs) as input and output images, and the second generator may take images and generate synthetic latent vectors. A first discriminator may determine the plausibility of the synthetic image from the first generator and the second discriminator may determine the plausibility of the synthetic latent vector from the second generator network. Additionally, the synthetic images from the first generator may be input to the second generator, and the synthetic latent vectors from the second generator may be input to the first generator in order to encourage cycle consistency - if an original latent vector is input to the first generator and the generated synthetic image is input to the second generator, then it is desirable that the output from the second generator substantially matches the original latent vector. Accordingly, a cycle-GAN may be thought of as two inter-related cGANS each comprising a generator and a discriminator. A loss function is further used to update each of the cGANs based on cycle consistency. Cycle consistency loss compares an image input to the cycle-GAN with the generated output and updates the generator models in each training iteration.

As another example, training the ANN to convert one or more latent vectors to a generated image may comprise training a GAN known as a Wasserstein GAN. A Wasserstein GAN is a further extension of the GAN idea. In a Wasserstein GAN (WGAN), the cost function to be minimised may be expressed as:

$$\min_{G} \max_{D \in \mathcal{L}} \mathop{\mathrm{E}}_{x \in P_r(x)}[D(x)] - \mathop{\mathrm{E}}_{x \in P_z(z)}[D(G(z))]$$

where L is the set of 1-Lipschitz functions.

As another example, training a GAN may comprise training a Style-GAN. In a Style-GAN architecture, a latent vector is provided to a first ANN, and the output of the first ANN is provided as input at several layers of a second ANN (the generator network).

At 560, the method comprises outputting a trained image segmentation model. In other words, at 560, the method comprises outputting the details of the trained ANN for converting a latent vector to a synthetic image.

With reference again to **Fig. 2** the processor unit(s) 204 may cause the features of the trained generator network, including weights and biases for the neurons of the trained neural network, to be output/stored in a data structure in persistent storage of the memory unit(s) 206 or communicated to a remote device via communications module 210.

While in the discussion above, the training of the ANN comprised training a form of GAN and outputting the trained generator network, the skilled person would appreciate that the training could be implemented according to another prescribed learning routing.

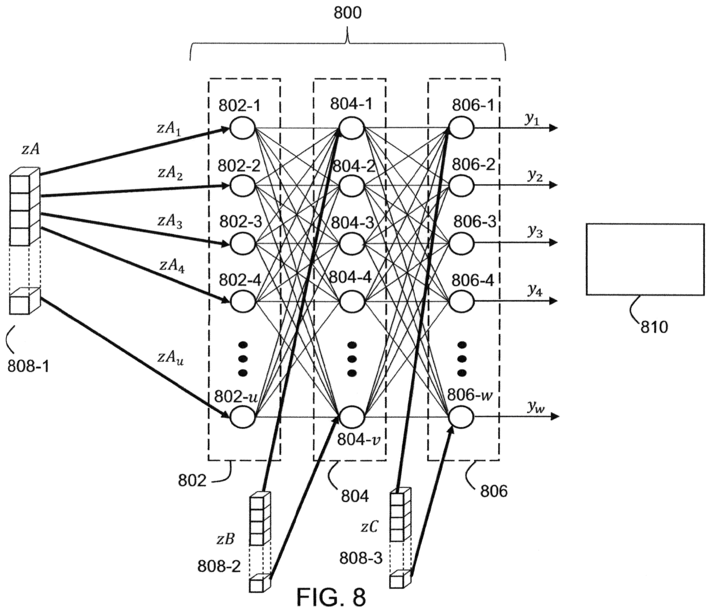

Furthermore, in the discussions above, the ANN 100 is trained to convert each latent vector to a corresponding synthetic image. In other examples, an ANN may be trained to convert a latent vector to a synthetic image with the use of other latent vectors. This is illustrated in **Fig. 8.** Much like the ANN 100 of **Fig. 1,** the ANN 800 of **Fig. 8** comprises an input layer 802 (comprising neurons 802-1 to 802-u), a hidden layer 804 (comprising neurons 804-1 to 804-v) and an output layer 806 (comprising neurons 806-1 to 806-w). Much like the ANN 100 of **Fig. 1,** the input layer is configured to receive as input values the magnitudes of components of a first latent vector zA (808-1), to provide the input values to an activation function, and to output the neurons' outputs to the next layer 804. The hidden layer 804 is configured to receive the outputs from the first layer 802. The hidden layer is further configured to receive a second latent vector zB (808-2). The hidden layer may accordingly receive the outputs from the first layer 802 and the second latent vector 808-2, provide such data as weighted arguments to the activation function of the hidden layer neurons and output the neurons' outputs to the next layer 806. The neurons of the output layer 806 are likewise configured to receive the outputs from the hidden layer neurons and a third latent vector zC 808-3, and to the neuron's outputs interpretable as an image 810. The latent vectors 808 may all be derived from the same boson sampler but be of different lengths to one another, for example if the integer sequences produced by the boson sampler are truncated to different lengths. The skilled person would appreciate that other neural network architectures that utilise multiple latent vectors output from a boson sampler may be used.

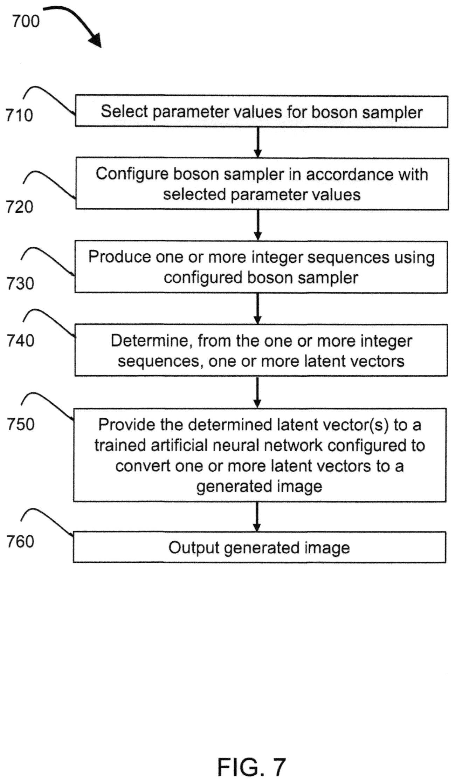

**Fig. 7** shows a flowchart of a method 700 for generating an image. The method 700 is suitable for performance by a system comprising one or more (classical) processor units and a configurable boson sampler, such as system 200 of **Fig. 2.** This method 700 will be discussed with reference to the system 200 of **Fig. 2,** but the skilled person will appreciate that other system architectures may be utilised.

At 710 the method comprises selecting parameter values $\{\theta\}$ of a set of parameters $\theta$ of the boson sampler. The parameter values $\{\theta\}$ may be set randomly (e.g., to produce random output data). The parameter values $\{\theta\}$ may be set according to a training procedure, where the parameter values $\{\theta\}$ are set in such a way that the output data minimizes a cost function.

With reference to **Fig. 2,** in some examples, the processor(s) 204 may receive an indication of the selected parameter values $\{\theta\}$ from a user input via the input/output unit 208 (for example, via a user directly entering the selected parameter values on a keyboard coupled to the system 200) or the communications module 210 (for example over the internet). In other examples, the processor(s) 204 may extract the selected parameter values $\{\theta\}$ from persistent memory of the memory unit 206. The processor(s) may then communicate the selected parameter values to the controller 222 of the boson sampler 214. The selected parameter values may be the same parameter values as used when training the ANN according to method 500.

At 720, the method 700 comprises configuring the boson sampler according to the selected parameter values. At 730, the method comprises producing an integer sequence using the configured boson sampler. The skilled person will appreciate that steps 720 and 730 may occur one after the other or substantially simultaneously, depending on the nature of the boson sampler, for example on whether the boson sampler is a spatial mode boson sampler or a temporal mode boson sampler.

With reference to **Fig. 2,** the controller 222 may generate control signals to configure parameters of the interferometer 218 in line with the selected parameter values $\{\theta\}$. The controller 222 may further generate one or more control signals to cause the state generation unit 216 to generate an input multimodal photonic state, and may subsequently receive an indication of the number of photons detected at each PNR photodetector of the state detection unit 220. The controller 222 may then interpret the number of photons detected in each output mode of the output multimodal photonic state as a sequence / string of integers and provide this integer sequence to the one or more processors 204. By re-running the boson sampler 214 a number of times, the controller 222 may provide a plurality of integer sequences to the processor(s). Among other advantages, the integer sequences produced by the boson sampler 214 may have statistical properties that cannot be replicated by a classical computer. Also, the performance of a generative model, such as a GAN, may be influenced by the statistical properties of its (e.g., random) inputs, where the performance improves when the inputs have similar properties to the output data. A GAN that uses boson sampler data as an input may thus exhibit improved performance on datasets.

At 740, the method comprises determining, from the one or more integer sequences, one or more latent vectors. This may be done in much the same way as described above in relation to method step 540 of method 500. At 750, the method comprises providing the determined one or more latent vectors to a trained artificial neural network configured to convert the one or more latent vectors to a synthetic image.

With reference to **Fig. 2,** the processor unit(s) may, for example, extract the trained model (for example, as a data file containing the trained weights and biases of the trained neural network) from the memory unit(s) 206, and produce the trained model accordingly. The determined one or more latent vectors may then be input to the trained generator model.

At 760, the method comprises outputting the generated image.

With reference to **Fig. 2,** the processor 204 may, for example, cause the generated image to be shown on the visual display 212, or may output the image file to a remote device via the communication module 210.

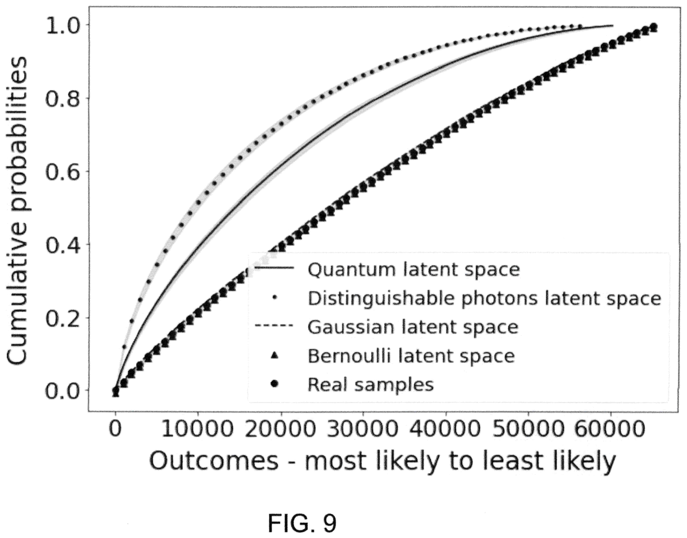

A first experiment performed by the inventors will be described in relation to **Fig. 9, Fig. 10,** and **Fig. 11.** In this experiment, the inventors trained Wasserstein generative adversarial networks with gradient penalty (WGAN-GP) to synthesise data using latent vectors from one of four different latent spaces. The WGAN-GP is described in Gulrajani et al., Improved Training of Wasserstein GANs, Advances in neural information processing systems, 30, 2017. Once trained, the outputs of the trained GANs were compared.

The first latent space comprised latent vectors of length 16 taken from the (classical, continuous) independent Gaussian distribution, $z \in \mathbb{R}^{16} \sim \aleph(0, I)$. In other words, the inputs of a first of the GANs were randomly selected from independent normal distributions.

The second latent space comprised latent vectors of length 16 taken from the (discrete) Bernoulli distribution, $z \in \{0,1\}^{16}$. In other words, the inputs of a second of the GANs were random independent binary variables.

The third latent space comprised latent vectors of length 16 determined from integer sequences output from a single-photon boson sampler. For such a short length (16) of latent vectors, the output of a boson sampler may be classically simulated. However, this small size allowed for a good comparison of the effects of the different latent spaces. For larger boson samplers, for example boson samplers having a few tens of photons, it is known that the output states of the boson sampler cannot be efficiently simulated classically.

The fourth latent space comprised latent vectors of length 16 determined from a simulation of a boson sampler with distinguishable photons (a useful benchmark).

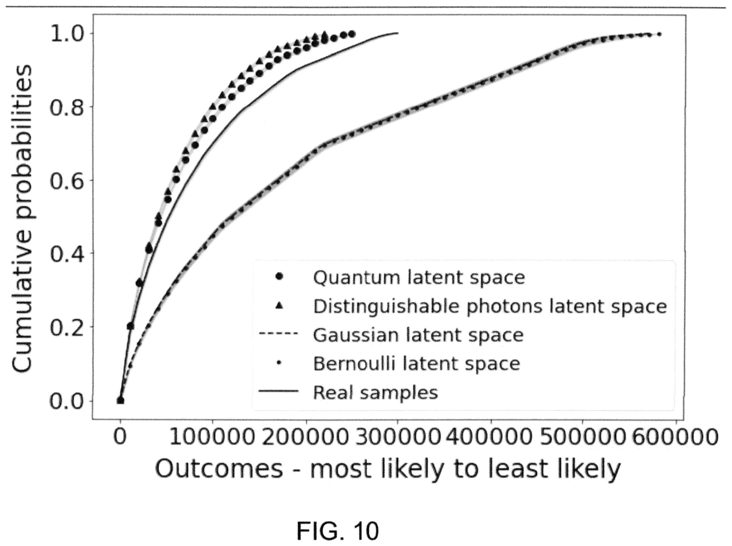

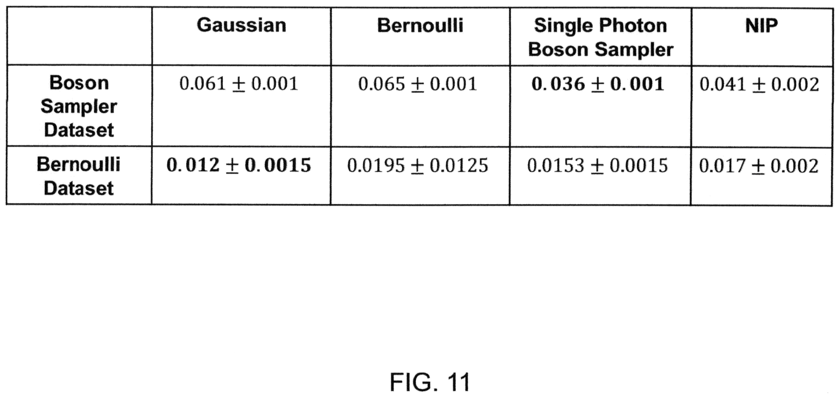

In order to explore the effects of the different latent spaces, the GANs were trained firstly to reproduce a Bernoulli distribution, and secondly to reproduce a boson sampler distribution (the boson sampler distribution used in training was very different to the boson sampler used for the third latent space). Whereas the Bernoulli distribution is uniform and uncorrelated, that of the boson sampler is very peaked with rich correlations between the channels. Whereas all the trained generator models (using the different latent space vectors) were able to successfully learn to approximate the Bernoulli distribution and the boson sampler distribution, some differences become apparent when looking at the cumulative distributions (**Fig. 9** and **Fig. 10**) and at the distances to the closest integers (**Fig. 11**).

**Figs. 9** and **10** show the cumulative probabilities of the samples generated by the GAN models with different latent spaces when the data includes Bernoulli (**Fig. 9**) and boson sampler (**Fig. 10**) distributions. For example, in **Fig. 9,** the ten thousand (10,000) most common outcomes sampled from the original dataset accounted for about 20 percent of all outcomes. The curves in both **Fig. 9** and **Fig. 10** are averaged over twelve runs. As is clear from the two figures, the cumulative distributions generated by the GANs are affected by the distributions of the latent spaces. The cumulative distribution of a uniform distribution such as Bernoulli is a straight line (a slight deviation is observed in **Fig. 9** due to finite sampling) and that of a non-uniform distribution is concave. In this case, uniform latent spaces provide better fits to uniform datasets than the non-uniform quantum distributions. However, for the boson sampler dataset (**Fig. 10**), the two non-uniform latent spaces provide better fits to the cumulative distributions than the uniform latent spaces. These results show that the distribution of the synthetic data generated by a trained GAN depend on the distribution of the latent spaces on which they are trained, and in particular the use of a quantum latent space enables the GAN to produce distributions that are different to the other classical latent spaces studied here.

The table of **Fig. 11** shows the average distances between the numbers generated by the GANs and their nearest integers. More particularly, the table of **Fig. 11** shows the L1 distances between the numbers generated by the GANs with different latent spaces (columns) and their closest integers, for different datasets (rows). Error bars correspond to the uncertainty of the mean estimated over 12 runs. In the table, "NIP" means "non-identical photons" and refers to the latent space corresponding to a boson sampler output when distinguishable photons are used. Recall that GANs generate continuous numbers and that it is only through training that they become quasi-discrete. As can be seen in **Fig. 11,** the use of different latent spaces affects the ability of the GAN to approximate the discrete nature of the data: for instance, a quantum latent space yields better performance on quantum data. This indicates that the properties of the latent space affect the quality of the generated data and that a quantum latent space can be more appropriate for some datasets.

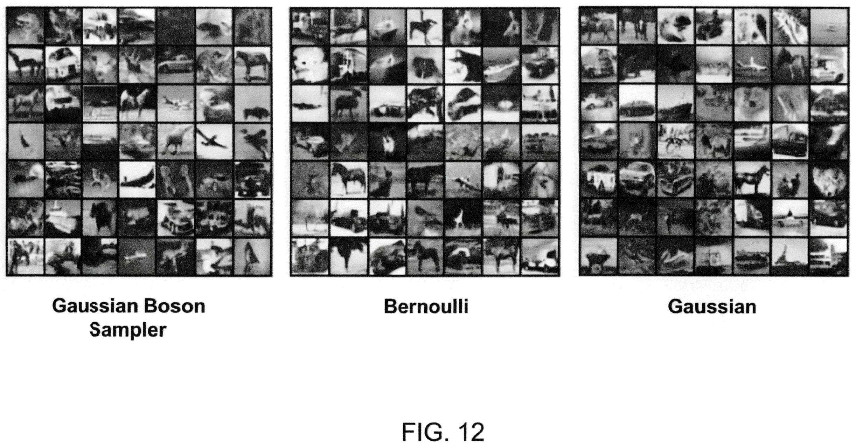

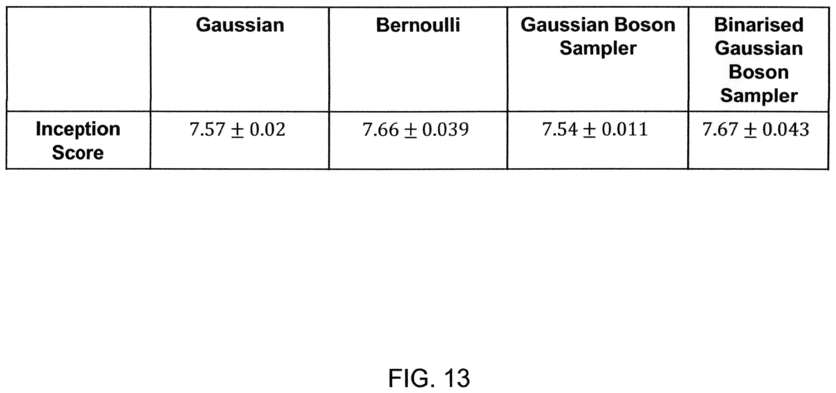

A second experiment performed by the inventors will now be described in relation to **Fig. 12** and **Fig. 13.** In this experiment, the inventors trained Wasserstein generative adversarial networks with gradient penalty (WGAN-GP) to synthesise data using latent vectors from one of four different latent spaces. The generative networks had a residual network (RESNET) architecture and over one million parameters were trained.

The first latent space comprised latent vectors of length 128 taken from the (classical, continuous) independent Gaussian distribution, $z \in \mathbb{R}^{128} \sim \aleph(0, I)$. The second latent space comprised latent vectors of length 128 taken from the (discrete) Bernoulli distribution, $z \in \{0,1\}^{128}$.

The third latent space comprised latent vectors of length 128 determined from integer sequences output from a Gaussian boson sampler. More specifically, a Gaussian boson sampler with 216 modes (not efficiently simulatable on a classical computer) was used to generate integer sequences. The integer sequences, with each integer corresponding to a number of photons detected by a PNR detector, were then truncated to have length 128.

The fourth latent space comprised binary latent vectors of length 128 also determined from integer sequences output from the Gaussian boson sampler. More specifically, the elements of these binary latent vectors have a value of zero when the corresponding element of the corresponding integer sequence is zero, and have a value of one when the corresponding element of the corresponding integer sequence is one or more.

The GANs were trained using the CIFAR-10 dataset. CIFAR-10 is a collection of images that can be used to train machine learning and computer vision algorithms. The CIFAR-10 dataset contains 60,000 32x32 colour images in 10 different classes. The 10 different classes represent airplanes, cars, birds, cats, deer, dogs, frogs, horses, ships, and trucks. There are 6,000 images of each class.

As illustrated in **Fig. 12,** the trained models all successfully generated images. In order to quantitatively evaluate the performance of models, a metric known as the inception score was calculated. More details on how the inception score for a GAN is calculated can be found in Salimans et al., Improved Techniques For Training GANs, International conference on intelligent, secure, and dependable systems in distributed and closed environments, pages 127-138, Springer, 2017. The inception scores for the different trained models are shown in the table of **Fig. 13.** The uncertainty of the mean is estimated over 5 runs. As can be seen in the table, there are some significant differences between the models.

These results demonstrate that a system comprising a boson sampler and an artificial neural network can be used to generate images. Moreover, using a boson sampler-derived latent space has been shown to outperform the standard choice of latent space, namely that formed by independent normal distributions, in image generation tasks.

As previously described, the above descriptions refer to generating images for convenience. The above descriptions are more generally applicable to generating datasets, such as synthetic images, synthetic videos, synthetic 3D shapes, synthetic text, synthetic molecule geometries or formulae, and synthetic time series. For example, the training method of described above in relation to **Fig. 5** may be adapted to train a ANN to generate synthetic datasets other than synthetic images. For example, the method described above in relation to **Fig. 7** may also be adapted to other generated (synthetic) datasets. For example, the block diagram of **Fig. 2** may be more generally used to generate any type of dataset. Note that the architecture and node connections of the neural network may be different based on the desired type of output dataset. For example, to achieve an advantage for image generation the neural network structure may be adapted for images, such as a convolutional neural network. However, if the output dataset is a graph, the neural network may be a graph neural network.

In some embodiments, the block diagram of **Fig. 2** is part of a cloud computing system where boson computing is provided as a shared service to separate users. For example, a cloud computing service provider operates the boson sampler 214 and allows users to use the boson sampler 214. For example, a user using a computing apparatus, generates control instructions, and transmits the control instructions to the system 200.

Variations of the methods and systems described herein are envisaged, as will be appreciated by the skilled person.

For example, in all of the examples described herein, the boson samplers have been configurable. The skilled person will appreciate that the parameters of an interferometer may not be configurable in some examples, and instead the boson sampler may only generate samples from a single distribution.

In other examples, the skilled person would appreciate that the parameter values of a configurable boson sampler may be optimised to better train a generator network. For example, training a generator network may comprise training the parameters of the boson sampler.

As will be appreciated by one skilled in the art, the present disclosure may be embodied as a system, method, or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in any one or more computer-readable medium/media having computer usable program code embodied thereon.

Aspects and embodiments are described herein with reference to flowchart illustrations and/or block diagrams of methods, apparatus (systems) and computer program products according to illustrative examples. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Each feature disclosed in this specification (including any accompanying claims, abstract or drawings), may be replaced by alternative features serving the same, equivalent or similar purpose, unless expressly stated otherwise. Thus, unless expressly stated otherwise, each feature disclosed is one example only of a generic series of equivalent or similar features. The disclosure is not restricted to the details of any foregoing embodiments. The disclosure extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

**Claims**

1.  A method comprising:

    controlling a boson sampler to produce a set of integer sequences, each integer sequence representative of a measurement outcome of one or more photodetectors of the boson sampler;
    determining, from the set of integer sequences, a set of latent vectors; and
    using the determined set of latent vectors, training an artificial neural network "ANN" to convert one or more latent vectors to a generated dataset.

2.  The method according to claim 1, wherein training the ANN to convert the set of latent vectors to the generated dataset comprises training a generative adversarial network "GAN", the GAN comprising:

    the ANN; and
    a second ANN; and

    wherein training the GAN comprises:

training the ANN, using the determined set of latent vectors and feedback from the second ANN, to generate an artificial dataset; and

training the second ANN, using a plurality of artificial datasets generated by the ANN and a plurality of genuine datasets, to classify received datasets as artificial datasets or genuine datasets, and to provide feedback to the first ANN; and

outputting the trained ANN configured to convert the one or more latent vectors to a generated dataset.

3. The method according to claim 1, wherein using the determined set of latent vectors to train the ANN to convert one or more latent vectors to the generated dataset includes providing different latent vectors to different layers of the ANN.

4. The method according to any preceding claim, the method further comprising:

controlling the boson sampler to produce one or more integer sequences, each of the one or more integer sequences representative of a measurement outcome of one or more photodetectors of the boson sampler;
determining, from the one or more integer sequences, one or more latent vectors;
providing the determined one or more latent vectors to the trained ANN; and

outputting the generated dataset.

5. The method according to any preceding claim, further comprising:

selecting a plurality of parameter values to configure an interferometer of the boson sampler;
wherein controlling the boson sampler comprises controlling the configured boson sampler.

6. The method according to any preceding claim, wherein the set of integer sequences comprises a set of binary strings.

7. The method according to any preceding claim, wherein determining, from the one or more integer sequences, one or more latent vectors comprises truncating integer sequences of the set of integer sequences.

8. A non-transitory computer readable storage medium having instructions stored thereon that, when executed by one or more processors communicatively coupled to a boson sampler, cause a method according to any preceding claim to be executed.

9. The system comprising:

a boson sampler; and
a set of one or more processors, wherein the set of one or more processors is configured to:

control the boson sampler to produce a set of integer sequences, each integer sequence representative of a measurement outcome of one or more photodetectors of the boson sampler;
determine, from the set of integer sequences, a set of latent vectors; and
using the determined set of latent vectors, train an artificial neural network "ANN" to convert one or more latent vectors to the generated dataset.

10. The system of claim 9, wherein the set of one or more processors is further configured to:

control the boson sampler to produce one or more integer sequences, each of the one or more integer sequences representative of a measurement outcome of photodetectors of the boson sampler;
determine, from the one or more integer sequences, one or more latent vectors;
provide the determined one or more latent vectors to the trained ANN configured to convert the one or more latent vectors to a generated dataset; and
output the generated dataset.

11. The system according to claim 9 or claim 10, wherein the boson sampler comprises a configurable interferometer, and wherein the set of one or more processors is configured to:
configure the interferometer of the boson sampler in accordance with a plurality of selected parameter values.

12. The system according to claim 9, claim 10 or claim 11, wherein the one or more photodetectors of the boson sampler are one or more photon number resolving "PNR" detectors.

13. The system according to claim 9, claim 10 or claim 11, wherein the photodetectors are on/off detectors configured to indicate the presence and/or absence of photons.

14. The system according to any of claims 9 to 13, wherein the one or more integer sequences comprises a set of binary strings, and wherein each binary integer of a binary string is representative of a presence or absence of photons in an output mode measured by a photodetector of the boson sampler.

15. The system according to any of claims 9 to 14, wherein the boson sampler is a single-photon boson sampler.

16. The system according to any of claims 9 to 15, wherein the boson sampler is a Gaussian boson sampler.

FIG. 1

**System 200**

Memory Unit(s) 206 — Input/Output Unit 208 — Communication Module 210

Communication Fabric 202

Processor Unit(s) 204

Visual Display 212

**Boson Sampler 214**

Controller 222

State Generation Unit 216 — Interferometer 218 — State Detection Unit 220

Computer-readable Storage Medium 224

Computer-readable instructions 226

FIG. 2

EP 4 760 607 A2

FIG. 3

214b

430

440

420

410

118b

216b

Controller 222b

220b

FIG. 4

500

510 — Select parameter values for boson sampler

520 — Configure boson sampler in accordance with selected parameter values

530 — Produce a set of integer sequences using configured boson sampler

540 — Determine, from the set of integer sequences, a set of latent vectors

550 — Use the determined latent vectors to train an artificial neural network to convert one or more latent vectors to a generated image

560 — Output trained image generation model

FIG. 5

FIG. 6

700

710 — Select parameter values for boson sampler

720 — Configure boson sampler in accordance with selected parameter values

730 — Produce one or more integer sequences using configured boson sampler

740 — Determine, from the one or more integer sequences, one or more latent vectors

750 — Provide the determined latent vector(s) to a trained artificial neural network configured to convert one or more latent vectors to a generated image

760 — Output generated image

FIG. 7

FIG. 8

EP 4 760 607 A2

FIG. 9

FIG. 10

EP 4 760 607 A2

| | Gaussian | Bernoulli | Single Photon Boson Sampler | NIP |
|---|---|---|---|---|
| **Boson Sampler Dataset** | $0.061 \pm 0.001$ | $0.065 \pm 0.001$ | $\mathbf{0.036 \pm 0.001}$ | $0.041 \pm 0.002$ |
| **Bernoulli Dataset** | $\mathbf{0.012 \pm 0.0015}$ | $0.0195 \pm 0.0125$ | $0.0153 \pm 0.0015$ | $0.017 \pm 0.002$ |

FIG. 11

**Gaussian Boson Sampler**   **Bernoulli**   **Gaussian**

FIG. 12

EP 4 760 607 A2

| | Gaussian | Bernoulli | Gaussian Boson Sampler | Binarised Gaussian Boson Sampler |
|---|---|---|---|---|
| Inception Score | $7.57 \pm 0.02$ | $7.66 \pm 0.039$ | $7.54 \pm 0.011$ | $7.67 \pm 0.043$ |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GULRAJANI et al.** Improved Training of Wasserstein GANs. *Advances in neural information processing systems*, 2017, vol. 30

- Improved Techniques For Training GANs. **SALIMANS et al.** International conference on intelligent, secure, and dependable systems in distributed and closed environments. Springer, 2017, 127-138